# FASCICULE DE BREVET EUROPEEN

(11) **EP 1 462 287 B1**
(45) Date de publication et mention de la délivrance du brevet: **21.12.2005**
(21) Numéro de dépôt: 04290780.8
(22) Date de dépôt: 23.03.2004
(51) Int. Cl.: B60K 11/04

(54) **Bloc avant d'un véhicule automobile et vehicule correspondant**
Kraftfahrzeugfrontmodul und mit diesem versehenes Fahrzeug
Vehicle front end module and vehicle equipped with such a module

(30) Priorité: 26.03.2003 FR 0303719
(43) Date de publication de la demande: 29.09.2004
(73) Titulaire: Peugeot Citroen Automobiles S.A., 78140 Vélizy Villacoublay (FR)
(72) Inventeur: Coppin, Olivier, 77700 Chessy (FR)
(74) Mandataire: Jacobson, Claude

(56) Documents cités:
- DE-A- 3 110 447
- FR-A- 1 034 340
- US-A1- 2003 019 232
- PATENT ABSTRACTS OF JAPAN vol. 010, no. 353 (M-539), 28 novembre 1986 (1986-11-28) -& JP 61 150824 A (ISUZU MOTORS LTD), 9 juillet 1986 (1986-07-09)

## Description

La présente invention concerne un bloc avant d'un véhicule automobile, ainsi que le véhicule muni d'un tel bloc avant. Le document DE 3110447A montre un bloc avant selon le preambule de la revendication 1.

Pour la plupart des véhicules dont le bloc avant comprend un groupe motopropulseur du véhicule et un capot recouvrant ce groupe moteur, la position relative des éléments situés sous le capot conditionne la dimension longitudinale du bloc avant, ainsi que la valeur du porte-à-faux avant, c'est-à-dire le couple de basculement vers l'avant subi par le véhicule autour de l'axe de rotation des roues du train avant.

Par ailleurs, l'émergence de préoccupations pour protéger les piétons en cas de choc frontal avec un véhicule automobile a conduit à définir une zone libre de tout élément rigide située entre le capot et les éléments situés sous ce capot. Cet espace libre se traduit généralement par une perte de volume utilisable pour l'implantation d'éléments mécaniques.

Le but de la présente invention est de proposer un bloc avant dans lequel le positionnement de ses éléments situés sous le capot réduit la valeur du porte-à-faux, tout en garantissant, voire améliorant, la protection des piétons en cas de choc.

A cet effet, l'invention a pour objet un bloc avant d'un véhicule automobile, tel que défini à la revendication 1.

D'autres caractéristiques de ce bloc avant, prises isolément ou selon toutes les combinaisons techniquement possibles, sont définies aux revendications 2 à 11.

L'invention a également pour objet un véhicule automobile, qui comporte un bloc avant tel que défini ci-dessus.

L'invention sera mieux comprise à la lecture de la description qui va suivre, donnée uniquement à titre d'exemple et faite en se référant aux dessins sur lesquels :
- la figure 1 est une vue schématique d'un bloc avant d'un véhicule automobile selon l'art antérieur ;
- la figure 2 est une vue analogue à la figure 1 d'un bloc avant d'un véhicule automobile selon l'invention ; et
- la figure 3 est une vue de côté d'un exemple de réalisation d'un bloc avant selon l'invention.

Par commodité, dans toute la suite, les termes « avant » et « arrière » sont définis par rapport au sens normal de déplacement du véhicule automobile considéré. De même, le terme « inférieur » désigne une direction orientée vers le sol sur lequel repose le véhicule, le terme « supérieur » désignant la direction de sens opposé.

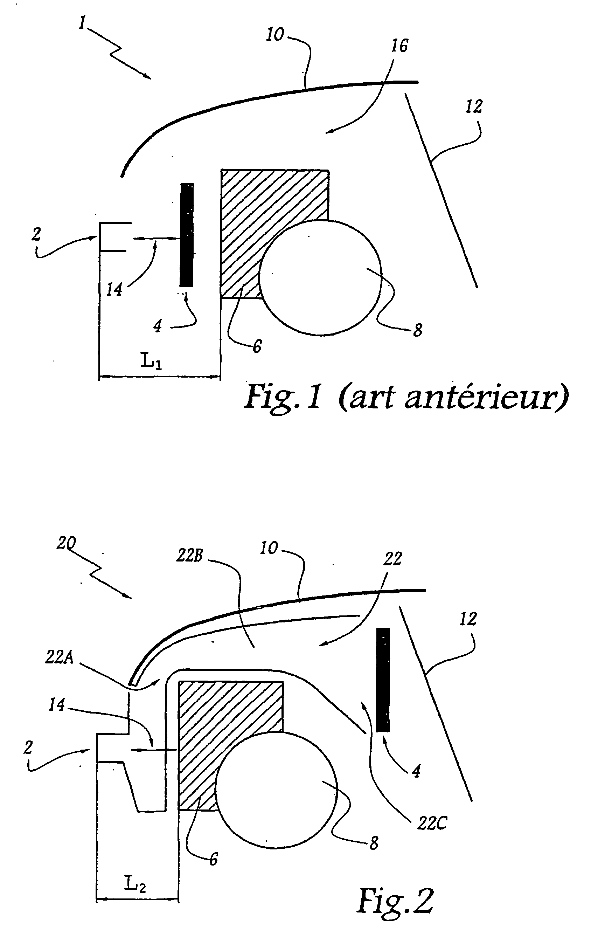

Sur la figure 1 est représenté un bloc avant 1 d'un véhicule automobile selon l'art antérieur. Ce bloc avant comporte essentiellement, depuis son extrémité avant vers l'arrière du véhicule, un pare-chocs 2, un radiateur 4 et un groupe motopropulseur 6. Le radiateur 4 est, de façon connue, adapté pour refroidir le groupe moteur 6, en évacuant de la chaleur issue de ce dernier lorsque le radiateur est balayé par un courant d'air provenant essentiellement de l'extérieur du véhicule. Le groupe motopropulseur 6 est relié à une paire de roues 8 disposées de chaque côté du véhicule et formant le train avant.

Le pare-chocs avant 2, le radiateur 4 et le groupe moteur 6 sont situés sous un capot 10 typiquement déplaçable entre une position ouverte dans laquelle il laisse libre accès par le haut aux éléments précités, et une position fermée, comme représenté sur la figure 1, dans laquelle il interdit cet accès.

Le bloc avant 1 est séparé d'un habitacle non représenté, situé en arrière de ce bloc avant, par un tablier 12.

Entre le pare-chocs avant 2 et le radiateur 4 est située une zone 14 dite de réparabilité, figurée par une double flèche. Cette zone est adaptée pour absorber des chocs de faible intensité, typiquement les chocs qui surviennent en zone urbaine pour des vitesses de choc inférieures à environ 15 km/h. Généralement, cette zone 14 est équipée de poutres déformables suivant la longueur du véhicule, à même d'absorber l'énergie du choc.

On notera que la dimension longitudinale L₁ de la partie d'extrémité avant du bloc 1 située en avant du groupe moteur 6 est imposée par les longueurs successives du pare-chocs 2, de la zone de réparabilité 14 et du radiateur 4. La valeur du porte-à-faux qui s'exerce sur le véhicule autour du train avant est directement liée à cette dimension longitudinale L₁.

Entre le capot 10 et le reste des éléments du bloc avant 1 est formé un espace 16 libre de tout élément, destiné à former une zone d'absorption d'impacts par déformation du capot, notamment pour la tête d'un piéton accidentellement renversé par le véhicule.

Sur la figure 2 est représenté un bloc avant 20 d'un véhicule automobile selon l'invention. Ce bloc avant 20 comprend essentiellement les mêmes éléments que le bloc avant 1, c'est-à-dire un pare-chocs avant 2, un radiateur 4, un groupe motopropulseur 6 à même d'entraîner les roues avant 8, un capot 10 et une zone de réparabilité 14. Il est séparé de l'habitacle du véhicule par un tablier 12.

Le bloc avant 20 se distingue du bloc avant 1 de l'art antérieur, d'une part, par la disposition relative des éléments précités, et, d'autre part, par l'existence d'une gaine 22 d'acheminement d'air, réalisée de préférence en matière plastique.

Plus précisément, le radiateur 4 est disposé en arrière du groupe moteur 6. De plus, pour acheminer l'air depuis la face frontale avant du bloc 20 jusqu'au radiateur 4, est prévue la gaine 22 disposée, suivant l'essentiel de sa longueur, entre le groupe moteur 6 et le capot 10. Cette gaine occupe ainsi pour l'essentiel la zone d'absorption de chocs pour piétons correspondant à l'espace référencé 16 pour le bloc avant 1 de la figure 1.

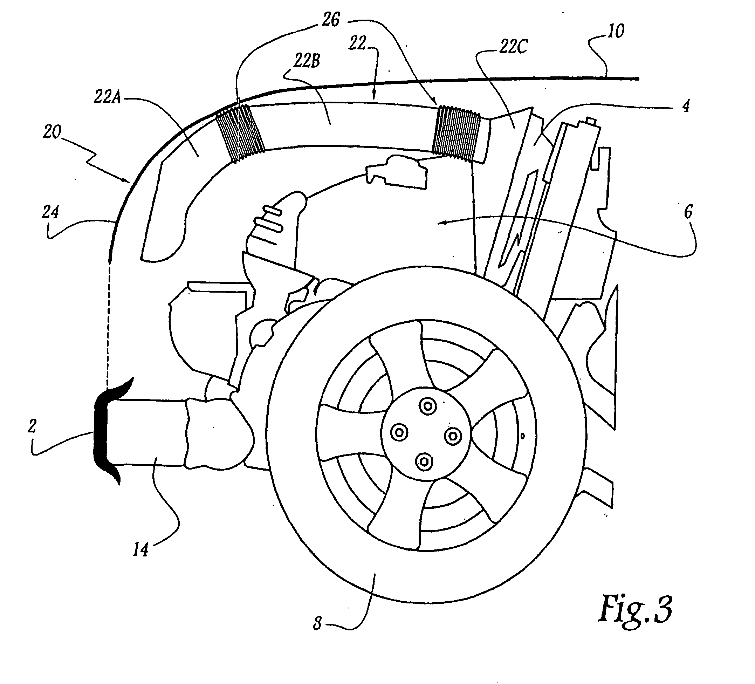

La gaine 22 repose sur le groupe moteur 6 et est dimensionnée de façon à ce que, lorsque le capot 10 est en position fermée, comme représenté sur les figures 2 et 3, la gaine est calée par coincement entre le capot et le groupe moteur.

Comme représenté plus en détail sur la figure 3, la gaine 22 comporte dans sa partie avant une bouche d'admission d'air 22A, dans sa partie courante un corps 22B et dans sa partie d'extrémité arrière un diffuseur 22C.

La bouche 22A forme des moyens de captage d'air depuis l'extérieur, disposés, suivant la direction longitudinale du bloc avant, en arrière du pare-chocs avant 2 et en avant du groupe moteur 6. Cette bouche 22A est par exemple disposée dans le prolongement arrière d'une calandre ajourée 24 fixée à la partie frontale avant du capot 10. De plus, la bouche d'admission 22A est longitudinalement disposée au niveau de la zone de réparabilité 14, par exemple à l'aplomb de traverses déformables interposées entre le pare-chocs 2 et le groupe moteur 6.

Le corps 22B de la gaine 22 est constitué d'un profilé creux, par exemple de section sensiblement rectangulaire, raccordant la bouche d'admission 22A au diffuseur 22C.

Le diffuseur 22C de la gaine 22 se présente sous la forme d'un pavillon disposé, pour l'essentiel, en arrière du groupe moteur 6 et adapté pour répartir l'air en sortie de la gaine sur sensiblement toute la surface d'échange calorifique du radiateur 4.

La gaine 22 comporte également deux soufflets 26 raccordant de façon flexible respectivement la bouche d'admission 22A au corps 22B et le corps 22B au diffuseur 22C. Ces soufflets permettent une certaine liberté de positionnement des éléments 22A, 22B, 22C de la gaine, les uns par rapport aux autres. La gaine 22 est de la sorte à même d'absorber les jeux de fermeture du capot vis-à- vis du groupe moteur et découple cinématiquement le capot et le groupe moteur.

Dans le bloc avant 20, la gaine 22, et plus particulièrement son corps 22B, forme des moyens d'absorption d'impacts sur le capot 10, notamment lors de chocs entre le bloc avant 20 et la tête d'un piéton renversé par le véhicule. A cet effet, le corps 22B est constitué d'un matériau rigide à faible énergie de rupture, à même de se rompre lors d'un impact dont l'intensité dépasse un seuil pré-déterminé, notamment fixé par des normes ou des préconisations relatives aux chocs avec des piétons.

En fonctionnement, c'est-à-dire lorsque le véhicule se déplace vers l'avant, de l'air pénètre dans la gaine 22 par la bouche 22A, est guidé par le corps 22B et est diffusé par le diffuseur 22C jusqu'au radiateur 4, ce dernier assurant le refroidissement du groupe motopropulseur 6.

En cas de choc entre le bloc avant 20 et un piéton tel que la tête de ce piéton vienne buter contre la face supérieure du capot 10, le capot 10 se déforme, provoque la déformation ou la rupture du corps 22B de la gaine 22 et absorbe alors l'énergie de l'impact, réduisant les risques de traumatismes importants pour la tête du piéton.

Le bloc avant selon l'invention permet en outre de réduire la dimension longitudinale L₂ de la partie avant du véhicule située en avant du groupe moteur 6. En effet, comme indiqué sur la figure 2, cette dimension longitudinale L₂ est essentiellement imposée par la longueur du pare-chocs avant 2 et la zone de réparabilité 14. La valeur du porte-à-faux avant du véhicule équipé du bloc avant 20 est donc réduite par rapport à celle du porte-à-faux pour le véhicule muni du bloc avant 1. De plus, la position plus avancée du train avant et de l'ensemble du groupe motopropulseur 6 conduit à une augmentation de l'empattement, c'est-à-dire de la distance séparant les trains de roues avant et arrière, ce qui favorise la tenue de route et le comportement routier du véhicule.

Avantageusement, la gaine 22 présente une structure et/ou est réalisée dans un matériau adapté pour insonoriser le groupe motopropulseur 6 et/ou pour cacher de manière stylisée ce groupe moteur.

Divers variantes et aménagements du bloc avant selon l'invention sont également envisageables. A titre d'exemple, le corps 22B de la gaine 22 est réalisé dans un matériau souple, adapté pour à la fois assurer l'acheminement d'air depuis la face frontale avant du véhicule jusqu'au radiateur 4 et se déformer lors d'un impact sur le capot 10, notamment lors de l'impact par la tête d'un piéton.

## Revendications

1. Bloc avant (20) d'un véhicule automobile, comportant un groupe motopropulseur (6), un organe (4) de refroidissement du groupe motopropulseur adapté pour évacuer de la chaleur lorsqu'il est balayé par un courant d'air, des moyens (22) d'acheminement d'air depuis l'extérieur du véhicule jusqu'à l'organe de refroidissement, et un capot (10) recouvrant au moins le groupe motopropulseur et l'organe de refroidissement, l'organe de refroidissement (4) étant disposé en arrière, par rapport au sens normal de déplacement du véhicule, du groupe motopropulseur (6), les moyens d'acheminement d'air comportant une gaine (22) de canalisation de l'air, essentiellement disposée entre le groupe motopropulseur (6) et le capot (10), ouverte à son extrémité avant et débouchant sur l'organe de refroidissement (4) à son extrémité arrière **caractérisé en ce que** la gaine (22) est flexible.

2. Bloc avant suivant la revendication 1, **caractérisé en ce que** la gaine (22) repose sur le groupe motopropulseur (6).

3. Bloc avant suivant l'une des revendications 1 ou 2, **caractérisé en ce que** la gaine (22) comporte au moins un corps (22B) d'absorption d'impacts sur le capot (10), notamment lors d'un choc entre le bloc avant (20) et la tête d'un piéton renversé par le véhicule.

4. Bloc avant suivant la revendication 3, **caractérisé en ce que** le corps d'absorption d'impacts (22B) est constitué d'un matériau rigide à faible énergie de rupture, à même de se rompre lors d'un impact.

5. Bloc avant suivant la revendication 3, **caractérisé en ce que** le corps d'absorption d'impacts (22B) est constitué d'un matériau souple à même de se déformer lors d'un impact.

6. Bloc avant suivant l'une quelconque des revendications précédentes, **caractérisé en ce que** la gaine (22) comporte au moins un élément souple (26) de découplage cinématique entre le groupe motopropulseur (6) et le capot (10).

7. Bloc avant suivant la revendication 6, **caractérisé en ce que** le ou chaque élément souple (26) de la gaine (22) est interposé entre les parties d'extrémité avant (22A) et d'extrémité arrière (22C) de la gaine.

8. Bloc avant suivant l'une quelconque des revendications précédentes, **caractérisé en ce qu'**il comporte un pare-chocs avant (2), et **en ce que** la partie d'extrémité avant de la gaine (22) forme des moyens (22A) de captage d'air, disposés en arrière du pare-chocs avant (2) et en avant du groupe motopropulseur (6).

9. Bloc avant suivant la revendication 8, **caractérisé en ce qu'**il comporte une zone de réparabilité (14) interposée entre le pare-chocs avant (2) et le groupe motopropulseur (6), et **en ce que** les moyens de captage d'air (22A) débouchent au niveau de ladite zone de réparabilité (14).

10. Bloc avant suivant l'une quelconque des revendications précédentes, **caractérisé en ce que** la partie d'extrémité arrière de la gaine (22) forme des moyens (22C) de diffusion de l'air en sortie de la gaine, sur l'organe de refroidissement (4).

11. Bloc avant suivant l'une quelconque des revendications précédentes, **caractérisé en ce que** la gaine (22) forme au moins en partie des moyens d'insonorisation et/ou de cache pour le groupe motopropulseur (6).

12. Véhicule automobile **caractérisé en ce qu'**il comporte un bloc avant (20) selon l'une quelconque des revendications précédentes.

## Patentansprüche

1. Kraftfahrzeugfrontmodul (20), mit einer Antriebsmotoreinrichtung (6), mit einer Kühleinrichtung (4) für die Antriebsmotoreinrichtung zum Abführen von mit einem Luftstrom mitgeführter Wärme, mit Mitteln (22) zum Abtransportieren von Luft aus dem Fahrzeug bis zu der Kühleinrichtung, und mit einer wenigstens die Antriebsmotoreinrichtung und die Kühleinrichtung abdeckenden Haube (10), wobei die Kühleinrichtung (4) in normaler Bewegungsrichtung des Fahrzeuges gesehen hinter der Antriebsmotoreinrichtung (6) angeordnet ist und wobei die Mittel zum Abtransportieren von Luft eine Hülle (22) zum Leiten der Luft aufweisen, die im Wesentlichen zwischen der Antriebsmotoreinrichtung (6) und der Haube (10) angeordnet und an ihrem vorderen Ende offen ist und sich mit ihrem hinteren Ende zur Kühleinrichtung (4) öffnet,
**dadurch gekennzeichnet,**
**dass** die Hülle (22) flexibel ist.

2. Frontmodul nach Anspruch 1, **dadurch gekennzeichnet, dass** die Hülle (22) auf der Antriebsmotoreinrichtung (6) ruht.

3. Frontmodul nach Anspruch 1 oder 2, **dadurch gekennzeichnet, dass** die Hülle (22) wenigstens einen Stoßdämpfer (22 B) für auf die Haube (10) einwirkende Stöße aufweist, besonders für Stöße zwischen dem Frontmodul (20) und dem Kopf eines von dem Fahrzeug angefahrenen Fußgängers.

4. Frontmodul nach Anspruch 3, **dadurch gekennzeichnet, dass** der Stoßdämpfer (22 B) aus gegen schwach Bruchenergie festem Material besteht, das unter Stoßeinwirkung bricht.

5. Frontmodul nach Anspruch 3, **dadurch gekennzeichnet, dass** der Stoßdämpfer (22 B) aus biegsamem Material besteht, das sich unter Stoßeinwirkung verformt.

6. Frontmodul nach irgendeinem der vorstehenden Ansprüche, **dadurch gekennzeichnet, dass** die Hülle (22) wenigstens ein sich kinematisch entkuppelndes biegsames Element (26) zwischen der Antriebsmotoreinrichtung (6) und der Haube (10) aufweist.

7. Frontmodul nach Anspruch 6, **dadurch gekennzeichnet, dass** das oder jedes biegsame Element (26) der Hülle (22) zwischen dem vorderen Ende (22 A) und dem hinteren Ende (22 C) der Hülle angeordnet ist.

8. Frontmodul nach irgendeinem der vorstehenden Ansprüche, **dadurch gekennzeichnet, dass** es eine vordere Stoßstange (2) aufweist und dass das vordere Ende der Hülle (22) hinter der vorderen Stoßstange (2) und vor der Antriebsmotoreinrichtung (6). Mittel (22 A) zum Aufnehmen von Luft bildet.

9. Frontmodul nach Anspruch 8, **dadurch gekennzeichnet, dass** zwischen der vorderen Stoßstange (2) und der Antriebsmotoreinrichtung (6) eine Reparatur-Zone (14) angeordnet ist und dass die Mittel (22 A) zum Aufnehmen von Luft in Höhe dieser Reparatur-Zone (14) münden.

10. Frontmodul nach irgendeinem der vorstehenden Ansprüche, **dadurch gekennzeichnet, dass** das hintere Ende der Hülle (22) Mittel (22 C) zum Verteilen der die Hülle (22) verlassenden Luft über die Kühleinrichtung (4) bildet.

11. Frontmodul nach irgendeinem der vorstehenden Ansprüche, **dadurch gekennzeichnet, dass** die Hülle (22) wenigstens teilweise Schalldämpfmittel und/oder eine Verkleidung für die Antriebsmotoreinrichtung (6) bildet.

12. Kraftfahrzeug, **dadurch gekennzeichnet, dass** es ein Frontmodul (20) nach irgendeinem der vorstehenden Ansprüche aufweist.

## Claims

1. Front end (20) for an automotive vehicle, made up of a power unit (6), a device (4) for cooling of the power unit which is designed to discharge heat when it is swept by a current of air, a means (22) of channelling air from the exterior of the vehicle to the cooling device and a bonnet (10) which covers at least the power unit and the cooling device, **characterised in that** the duct (22) is flexible, with the cooling device (4) being arranged to the rear of the power unit (6) relative to the usual direction of movement of the vehicle, with the means of channelling the air being made up of an air transport duct (22), essentially arranged between the power unit (6) and the bonnet (10), and which is open at its front end and which opens onto the cooling device (4) at its rear end.

2. Front end as described in claim 1, **characterised by** the fact that the duct (22) rests on the power unit (6).

3. Front end as described in any of claims 1 or 2, **characterised by** the fact that the duct (22) is made up of at least one body (22B) which absorbs impacts on the bonnet (10), in particular during impacts between the front end (20) and the head of a pedestrian run over by the vehicle.

4. Front end as described in claim 3, **characterised by** the fact that the impact absorbing body (22B) is made up of a rigid material of low rupture strength, so that it breaks during impact.

5. Front end as described in claim 3, **characterised by** the fact that the impact absorbing body (22B) is made up of a flexible material, so that it deforms during impact.

6. Front end as described in any of the preceding claims, **characterised by** the fact that the duct (22) contains at least one flexible element (26) for kinematic decoupling of the power unit (6) from the bonnet (10),

7. Front end as described in claim 6, **characterised by** the fact that the, or each, flexible element (26) of the duct (22) is located between the front end (22A) and rear end (22C) parts of the duct.

8. Front end as described in any of the preceding claims whatsoever, **characterised by** the fact that it includes a front bumper (2), and by the fact that the front end-part of the duct (22) forms a means (22A) for trapping air, located to the rear of the front bumper (2) and in front of the power unit (6).

9. Front end as described in claim 8, **characterised by** the fact that it includes a repairability zone (14) located between the front bumper (2) and the power unit (6), and by the fact that the means for trapping air (22A) opens out into the said repairability zone (14).

10. Front end as described in any of the preceding claims whatsoever, **characterised by** the fact that the rear end-part of the duct (22) forms a means (22C) of diffusing the air at the outlet from the duct onto the cooling device (4).

11. Front end as described in any of the preceding claims whatsoever, **characterised by** the fact that the duct (22) forms, at least in part, a means of soundproofing and/or covering the power unit (6).

12. Automotive vehicle **characterised by** the fact that it includes a front end (20) as described in any of the preceding claims whatsoever.
